# EUROPEAN PATENT APPLICATION

(11) **EP 3 739 808 A1**
(43) Date of publication of application: **18.11.2020**
(21) Application number: 20174891.0
(22) Date of filing: 15.05.2020
(51) Int. Cl.: H04L 9/08

(54) **TRANSIENT KEY NEGOTIATION FOR PASSENGER ACCESSIBLE PERIPHERALS**

(30) Priority: 17.05.2019 US 201916416039
(71) Applicant: Panasonic Avionics Corporation, Lake Forest, CA 92630 (US)
(72) Inventor: Watson, Philip, Lake Forest, CA California 92630 (US)
(74) Representative: Barker Brettell LLP

(57) **Abstract**

Disclosed are devices, systems and methods for transient key negotiations for passenger accessible peripherals are disclosed. Embodiments of the disclosed technology advantageously mitigate the threat of hacking an in-flight entertainment system on an aircraft by ensuring that a peripheral device establishes an encryption key with the host systems upon powering up, using it only for the duration of that power cycle. An exemplary method for secure data communication includes generating, by a host device upon determining a power-up sequence has been performed, a random key, generating, using a static pre-shared key, an encrypted version of the random key, transmitting, to a peripheral device, the encrypted version of the random key, receiving, from the peripheral device, a message encrypted using the random key, and performing, using the random key and subsequent to the receiving, one or more communications with the peripheral device.

## Description

### TECHNICAL FIELD

This document is directed generally to network system security, and in particular, to security for in-flight entertainment (IFE) networks and systems.

### BACKGROUND

Air travel typically involves journeys over extended distances that at the very least take several hours to complete, and airlines therefore provide on-board in-flight entertainment (IFE) systems that offer a wide variety of multimedia content for passenger enjoyment. However, existing IFE systems are vulnerable to hacking by personal devices brought on-board by passengers, which may result in tampering with critical flight and autopilot subsystems.

### SUMMARY

Methods and systems described in the present document advantageously mitigate the threat of hacking the IFE systems by ensuring that a peripheral device establishes an encryption key with the host systems upon powering up, using it for the duration of that power cycle, and establishing a new key upon a subsequent power up. Using secure key generation for each power cycle mitigates the ability of an external device to hijack an existing validated peripheral device.

In one exemplary aspect, a method for secure communication is disclosed. The method includes transmitting, by a peripheral device upon performing a power-up sequence, a request for a random key; receiving, from a host device, an encrypted version of the random key; recovering the random key by decrypting, based on a static pre-shared key, the encrypted version of the random key; and performing, using the random key and subsequent to the recovering, one or more communications with the host device.

In another exemplary aspect, a method for secure communication is disclosed. The method includes generating, by a host device upon determining a power-up sequence has been performed, a random key; generating, using a static pre-shared key, an encrypted version of the random key; transmitting, to a peripheral device, the encrypted version of the random key; receiving, from the peripheral device, a message encrypted using the random key; and performing, using the random key and subsequent to the receiving, one or more communications with the peripheral device.

In yet another exemplary aspect, the above-described methods are embodied in the form of processor-executable code and stored in a computer-readable program medium.

In yet another exemplary embodiment, a device that is configured or operable to perform the above-described methods is disclosed.

In a further exemplary aspect of the invention, we disclose a method for secure data communication, comprising:
(a) transmitting, by a peripheral device upon performing a power-up sequence, a request for a random key;
(b) receiving, from a host device, an encrypted version of the random key;
(c) recovering the random key by decrypting, based on a static pre-shared key, the encrypted version of the random key; and
(d) performing, using the random key and subsequent to the recovering, one or more communications with the host device.

The method may further comprise repeating steps (a) through (d) each time the peripheral device performs the power-up sequence.

The method may further comprise determining that the power-up sequence has been performed; and transmitting, upon completing the power-up sequence, a request for another random key.

The method may further comprise receiving, from the host device, an unencrypted video stream.

The static pre-shared key may be stored on a program memory that is locked and cannot be read by an external device.

The one or more communications may be encrypted using a cipher block chaining (CBC) mode of a 256-bit Advanced Encryption Standard (AES) or a stream cipher, typically at an application layer.

According to a further exemplary aspect of the invention, we disclose a method for secure data communication, comprising:
(a) generating, by a host device upon determining a power-up sequence has been performed, a random key;
(b) generating, using a static pre-shared key, an encrypted version of the random key;
(c) transmitting, to a peripheral device, the encrypted version of the random key;
(d) receiving, from the peripheral device, a message encrypted using the random key; and
(e) performing, using the random key and subsequent to the receiving, one or more communications with the peripheral device.

The method may further comprise repeating steps (a) through (e) each time it is determined that the power-up sequence has been performed.

Determining the power-up sequence has been performed may comprise performing the power-up sequence.

Determining the power-up sequence may comprise receiving a key request from the peripheral device.

The generating the random key may be based on a trusted platform module (TPM) configured to securely generate one or more keys.

Generating the random key may be based on at least one of a current date, a current time or a media access control (MAC) address.

Generating the random key may be based on at least one of a build time of a first software module or a validity date or time of a second software module.

The static pre-shared key may be stored on a program memory that is locked and cannot be read by an external device.

The one or more communications may be encrypted using a cipher block chaining (CBC) mode of a 256-bit Advanced Encryption Standard (AES) or a stream cipher, typically at an application layer.

According to a further exemplary aspect of the invention, we disclose a computer program product stored on a non-transitory computer readable media, the computer program product including program code for carrying out a method for secure data communication, the method comprising:
(a) generating, by a host device upon determining a power-up sequence has been performed, a random key;
(b) generating, using a static pre-shared key, an encrypted version of the random key;
(c) transmitting, to a peripheral device, the encrypted version of the random key;
(d) receiving, from the peripheral device, a message encrypted using the random key; and
(e) performing, using the random key and subsequent to the receiving, one or more communications with the peripheral device.

The method may further comprise repeating steps (a) through (e) each time it is determined that the power-up sequence has been performed.

Determining the power-up sequence has been performed may comprise performing the power-up sequence.

Determining the power-up sequence has been performed may comprise receiving a key request from the peripheral device.

The above and other aspects and their implementations are described in greater detail in the drawings, the descriptions, and the claims.

### BRIEF DESCRIPTION OF THE DRAWINGS

FIGS. 1A and 1B show exemplary airplane seat configurations that can implement embodiments of the disclosed technology.
FIGS. 2A-2C show block diagrams of different exemplary configurations of embodiments of the disclosed technology.
FIG. 3 shows a timeline of example messages passed to implement embodiments of the disclosed technology.
FIGS. 4A-4C show examples of message formats used to implement embodiments of the disclosed technology.
FIG. 5 shows a flowchart of an example method for secure communication, in accordance with embodiments of the disclosed technology.
FIG. 6 shows a flowchart of another example method for secure communication, in accordance with embodiments of the disclosed technology.
FIG. 7 shows a block diagram of an example device that can implement embodiments of the disclosed technology.

### DETAILED DESCRIPTION

Air travel typically involves journeys over extended distances that at the very least take several hours to complete. Some of the longer non-stop international flights have scheduled durations of over sixteen hours with travel distances extending beyond ten thousand miles. Passengers on board the aircraft are confined within an enclosed space of a designated seat for the entire duration of the flight, with only a few limited opportunities to leave the seat for use of the lavatory and so forth. Thus, even on the shortest trips an airline passenger has some idle time, which the passenger may occupy with work, leisure, and/or rest.

Airlines therefore provide on-board in-flight entertainment (IFE) systems that offer a wide variety of multimedia content for passenger enjoyment. Recently released movies are a popular viewing choice, as are television shows such as news programs, situation and stand-up comedies, documentaries, and so on. Useful information about the destination such as airport disembarking procedures, immigration and custom procedures and the like are also frequently presented. Audio-only programming is also available, typically comprised of playlists of songs fitting into a common theme or genre. Likewise, video-only content such as flight progress mapping, flight status displays, and so forth are available. Many in-flight entertainment systems also include video games that may be played by the passenger.

The specific installation may vary depending on service class, though in general, each passenger seat is equipped with a display device, an audio output modality, an input modality, and a terminal unit. The terminal unit may generate video and audio signals, receive inputs from the input modality, and execute pre-programmed instructions in response thereto. The display device is typically an LCD screen that is installed on the seatback of the row in front of the passenger, though in some cases it may be mounted to a bulkhead or retractable arm, or the like, that is in turn mounted to the passenger's seat. Furthermore, the audio output modality is a headphone jack, to which a headphone, either supplied by the airline or by the passenger, may be connected.

Notwithstanding the availability of airline-installed IFE equipment such as the aforementioned seatback display screens and headphone jacks, an increasing number of passengers are choosing to bring on board their own portable electronic devices (PEDs) such as smart phones, media players, electronic readers, tablets, laptop computers, and so forth. In most cases, these devices are loaded with music, video, games, and other multimedia content of the user's choosing well before embarking.

However, some of these personal devices may contain content that may be used by certain passengers with malicious intent to adversely interface with the IFE and other airplane systems. Recently, there was a news report about potential vulnerability of an airplane's computer and navigation systems being accessible through a passenger terminal.

Embodiments of the disclosed technology can advantageously mitigate various threats or threat vectors including, but not limited to, the following:
(a) A malicious passenger physically tampers with the Ethernet peripheral connector, cable, or device itself, in order to connect his own malicious device to the Ethernet network.
(b) The malicious device eavesdrops on all handset communications (and more easily on those that must be forwarded to another seat network due to handsets being wired to the seat row behind the smart monitor (SM) viewed), listening for credit card digits or protected personal information (e.g., an email address) when manually entered.
(c) The malicious device injects malicious messages to multiple components that cause abnormal displays on seat monitors or peripheral displays, which causes at least brand damage to the airline and IFE system providers.
(d) An attacker steals a peripheral, determines how to build his own malicious software, and injects a software load command to multiple peripherals.

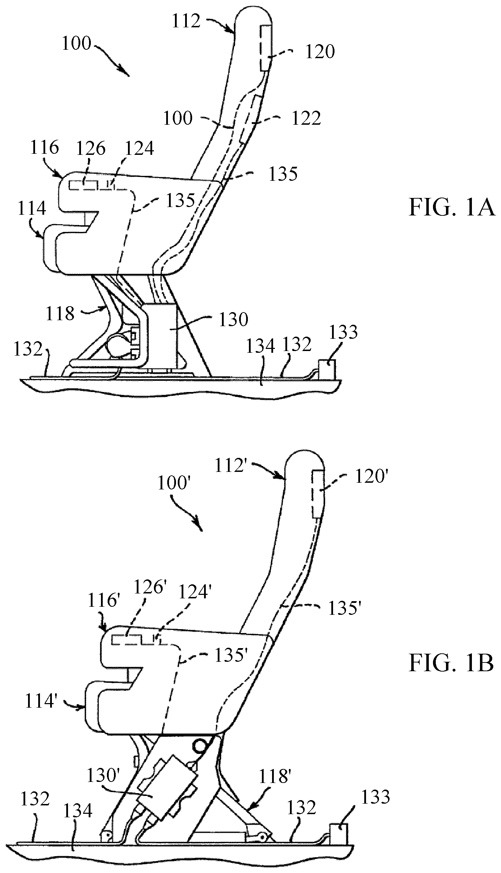

FIGS. 1A and 1B show different exemplary configurations of a seat in an airplane. As shown in FIG. 1A, the seat assembly 100 includes a seat back 112, a seat cushion 114, an arm portion 116, and multiple leg supports 118. The seat assembly 100 typically includes several electronic components, which can include one or more of a single or multi-function video display unit (VDU) 120, a telephone 122, an audio interface 124 and a personal control unit (PCU) 126. The exemplary configuration shown in FIG. 1A is typically preceded and followed by seats that form the rows of an airplane.

FIG. 1B shows a different exemplary configuration of an airplane seat, but includes a number of components and features that are common to the configuration shown in FIG. 1A. For purposes of explanation, it is assumed that the seat shown in FIG. 1B is the seat behind the seat shown in FIG. 1A, and portions of the second seat assembly 100' that are similar to the first seat assembly 100 are indicated with the same reference numeral augmented by a prime.

In some embodiments, the PCUs 126, 126' allow a passenger to control each of the electronic components included for that passenger's use. Generally, the VDU 120 on the first seat assembly 100 is controlled by the PCU 126' associated with the second seat assembly 100'. In other embodiments, the telephone 122 on the first seat assembly 100 is available for use by the passenger seated in the second seat assembly 100'. In yet other embodiments, the PCU 126', also controls the volume of the audio interface 124', and the signal being received by the VDU 120.

In some embodiments, each electronic component has a corresponding seat electronics box (SEB) or a seat electronics unit (SEU), housed in a box 130, which is mounted to the first seat assembly 100. The second seat assembly 100' also includes a box 130'. In an example, and as shown in FIGS. 1A and 1B, each SEB/SEU box 130, 130' is mounted to its associated leg supports 118, 118'. In some embodiments, cable bundles 132 with multiple conductors extend from each SEB/SEU 130, 130' and run along aisleway 134 and interconnect the SEB/SEU boxes 130, 130' within a seat. The cable bundles 132 carry signals and power from a signal and power source 133 to and between seat assemblies 100, 100'.

In some embodiments, the SEB/SEU boxes 130, 130' are line replaceable units (LRU). An LRU is a portion of a component which may be easily removed and replaced to ensure proper functioning of the component. In some embodiments, each seat component such as the VDU 120, and telephone 122, has its own SEB/SEU box 130. In other embodiments, multiple seat components may be associated with a single SEB/SEU box 130, 130'. The SEB/SEU boxes 130, 130' are LRUs so that if at any time a component no longer works and the problem can be isolated to the SEB/SEU box 130, 130', then the SEB/SEU box can be replaced. In some embodiments, each SEB/SEU box 130, 130' will perform at least one of the following: power conversion, information management, signal routing and data management.

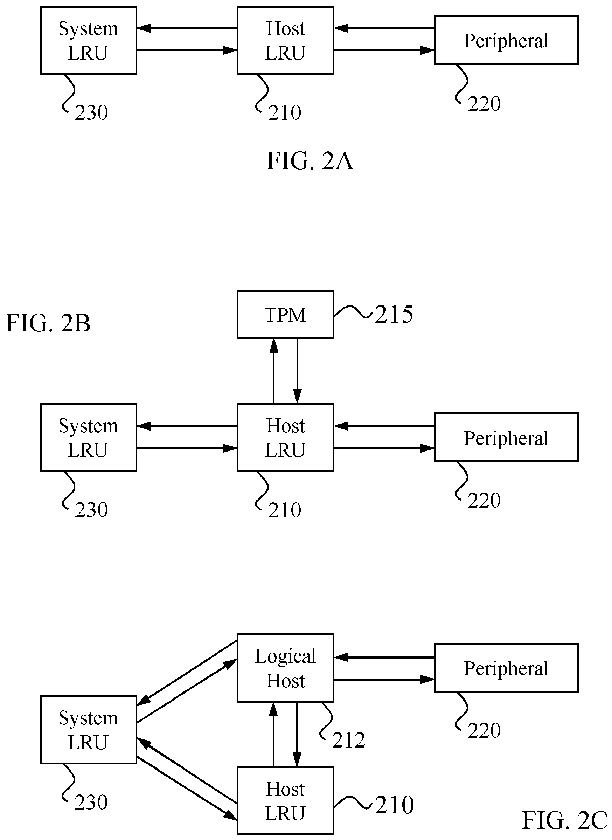

Components and subsystems of the airplane seat configurations shown in FIGS. 1A and 1B, and relevant to embodiments of the disclosed technology, are shown in the simplified block diagrams in FIGS. 2A, 2B and 2C. In FIGS. 2A-2C, the following terminology is used:
∘ *Peripheral:* a handset or other device used by a passenger.
∘ *Host LRU:* the SM or SEB or similar device that is connected to the peripheral via a 2-wire Ethernet connector.
∘ *Logical host:* the SM or SEB or similar device assigned by a wiring configuration to be logically paired with the peripheral. In some embodiments, the host LRU and the logical host are the same entity. In other embodiments (e.g., handset feed-forward configurations), the logical host is different from the host LRU.
∘ *System LRU:* any device in the IFE system that is not one of the above.

In some embodiments, the host LRU may include or be coupled to a Trusted Platform Module (TPM), which is a special chip which allows for secure key generation and storage and authenticated access to data encrypted by this key.

In some embodiments, the arm-mounted PCU comprises a Programmable Intelligent Computer (PIC) microcontroller, which does not include a TPM.

In some embodiments, third-party applications are only authorized to run on certain peripheral types (e.g., with specific hardware or software). In other embodiments, some third-party applications may require internet connectivity (e.g., Wi-Fi connectivity).

In some embodiments, the host LRU may be a unit that does not include a TPM.

FIGS. 2A-2C show block diagrams of different exemplary configurations that can implement embodiments of the disclosed technology. In some embodiments, and as shown in FIG. 2A, the host LRU 210 is connected to the peripheral 220 via a 2-wire Ethernet connector, and communicatively coupled to the system LRU 230. The peripheral 220 does not communicate directly with the system LRU 230, thereby ensuring that the host LRU 210 can monitor and check all traffic and commands that originate from the peripheral 220.

In the embodiment shown in FIG. 2B, the host LRU 210 is coupled to a Trusted Platform Module (TPM) 215, which is leveraged for key generation and management. In this example, the host LRU 210 is also the logical host. FIG. 2C shows an embodiment wherein the peripheral 220 is connected to a logical host 212, which is distinct from the host LRU 210.

In some embodiments, at the power up of the host LRU 210 or the peripheral 220, both may negotiate a random encryption key to be used for the remainder of the communications between the two (and the handset's logical host 212) for that power cycle. Keys shall not be reused. In an example, the random key may come from the TPM 215 if the host LRU 210 has one. In another example, and if the TPM is not available, the key's random seed may include media access control (MAC) addresses of each host and the current date/time.

In some embodiments, key negotiations between the host LRU 210 and the peripheral 220 may be protected by a static, pre-shared key that is embedded into both the peripheral and host LRU software, and is referred to as a key encrypting key (KEK).

In some embodiments, and to mitigate the risk of an adversary reverse engineering the KEK from a stolen handset or using a man-in-the-middle (MITM) attack, the handset locks its program memory from being read externally once it is programmed.

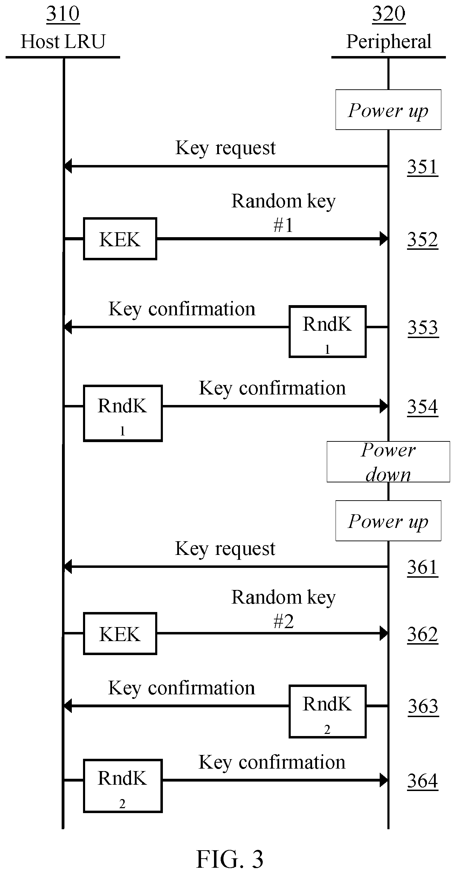

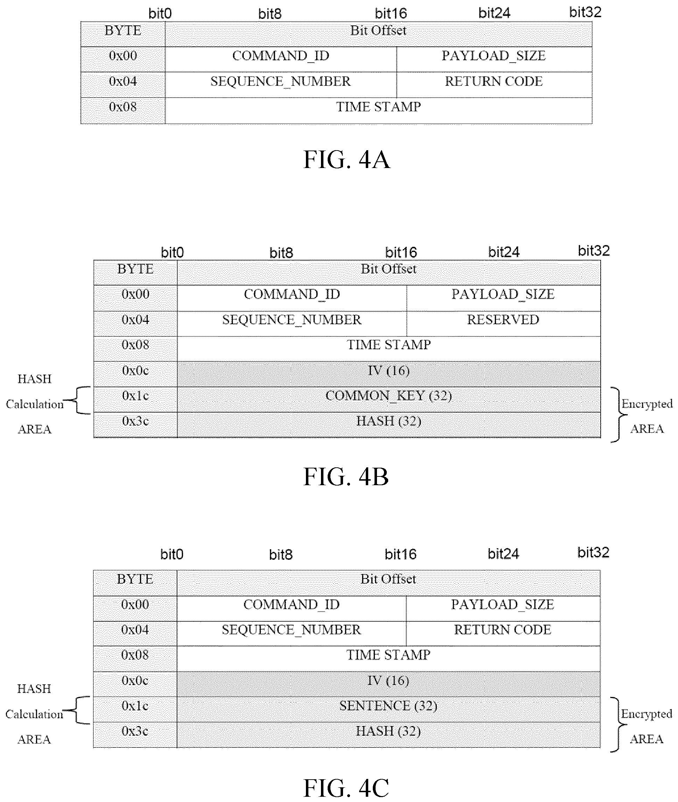

FIG. 3 shows a timeline of example messages passed between the host LRU 310 and the peripheral 320. As shown in FIG. 3, at step 351, the peripheral 320 transmits a key request to the host LRU 310 upon powering up (e.g., the peripheral transmits "Hello, I've just powered up. What key can we use"?). In some embodiments, an exemplary message format of the key request is shown in FIG. 4A. In an example, the PAYLOAD_SIZE field is set to 0x0000 (a zero value) since the key request only identifies the peripheral to the host LRU, and no payload is needed. In another example, the key request is sent periodically (e.g., at 1-second intervals) by the peripheral 320 until a response from the host LRU 310 is received.

Upon receiving the key request, the host LRU 310 uses the TPM and/or performs random number generation using dates, times, host and peripheral MACs as seeds to generate a random key #1 (referred to as "RndK₁"). At step 352, the host LRU 310 encrypts the random key with the key encrypting key (KEK, which is pre-shared and embedded in both the host LRU and peripheral software) and transmits it to the peripheral 320 (e.g., the host LRU sends "How about this one? [random key]" which is encrypted with the KEK). In some embodiments, an exemplary message format of the key request response is shown in FIG. 4B. As shown therein, the message may include an initialization vector (IV), and the random key (in the COMMON_KEY field in FIG. 4B) that has been encrypted with the KEK.

At step 353, the peripheral 320 transmits a message encrypted with the random key (e.g., "Can you hear me now?") to verify and validate that it has correctly received the key.

At step 354, the host LRU 310 confirms the verification and validation by responding to the peripheral 320 (e.g., "Loud and clear" which is also encrypted with the random key).

In some embodiments, the verification messages transmitted in steps 353 (from the peripheral 320 to the host LRU 310) and step 354 (from the host LRU 310 to the peripheral 320) may use a message format shown in FIG. 4C. In an example, the SENTENCE field is used to transmit the "Can you hear me now?" and "Loud and clear" messages, and is encrypted with the random key (e.g., "RndK₁").

In some embodiments, the SEQUENCE NUMBER and TIMESTAMP fields in the message formats shown in FIGS. 4A-4C are used (as intended, for the sequence number and the timestamp, respectively) in messages from the peripheral to the host LRU, whereas the fields are optional (and typically not needed) in messages from the host LRU to the peripheral.

In some embodiments, additional messages may be communicated between the host LRU and the peripheral during the establishment of the random key upon powering up. In an example, error messages may be transmitted to indicate that a message has not been received correctly. In another example, version, size and checksum information may be transmitted for the various software components (e.g., a bootloader or one or more applications) used either by the peripheral, the host LRU or both.

In some embodiments, when the host LRU 310 has no TPM and the current date/time has not yet been received at power up by the host LRU, a key may be negotiated between the host LRU 310 and peripheral 320 using software build times or a more recently stored time.

In some embodiments, and once the random key (RndK₁) has been established, the remainder of the communications between the host LRU and the peripheral may be encrypted using the cipher block chaining (CBC) mode of AES256, if supported by the peripheral. In other embodiments, a stream cipher (e.g., ChaCha20) may be used for subsequent communications.

However, if the peripheral device were to power down (e.g., due to an electrical fault or the peripheral being disconnected and replaced with a passenger's personal device) and then powered up again, a new key request is transmitted from the peripheral device to the host LRU (step 361). This is followed by steps 362-364 that mirror steps 352-354 described above, and results in a new random key (referred to as "RndK₂" and different from "RndK₁") being used for subsequent communications after the second power-up sequence.

Using a new random key each time the peripheral device performs a power-up sequence advantageously ensures that an illegitimate device that is plugged in will not be able to piggy-back off the previous encrypted session, and will not be able to establish a new encrypted session since it lacks the KEK that is pre-stored in a legitimate peripheral's memory.

In some embodiments, the ciphertext stealing (CTS) may also be used to reduce padding in all messages so as to be a multiple of the cipher block size.

In some embodiments, only critical information (e.g., personal messages, credit card information, mouse/touchpad movement, keypresses, etc.) may be encrypted in the subsequent communication, whereas media streams (e.g., video and audio content, games, sensor data from accelerometers, temperature sensors, magnetometers, etc.) need not be encrypted. In other embodiments, all data streams and signaling may be encrypted during the power cycle.

In some embodiments, the encryption is at the application layer.

In some embodiments, supported third-party applications on the peripherals can provide their own data security. In an example, packets transmitting handset button presses may include at least 32 bytes (256 bits) of random padding, called salt, to prevent an attacker building a dictionary of encrypted packets for each keystroke (particularly the 10 digits). In another example, the salt must be generated anew with every packet, and could use as the first random number seed the current assigned encryption key. In yet another example, and for AES-CBC, the salt may also be used as the IV which is sent in the clear.

In some embodiments, and to support decryption checks, every encrypted message may include an integrity check field. If, after decryption, the integrity check fails, the decryption may be considered to have failed and the message ignored. In an example, the integrity check may follow standard Message Authentication Code algorithm requirements (SHA2, SHA3, or Poly13052).

### Exemplary peripheral security protocols

In some embodiments, software loads to peripherals will be authenticated by a digital signature or certificate. In an example, the peripheral may embed a public root certificate into is factory-installed firmware.

In another example, the peripheral may validate the digital signature of binaries it receives, that the signature is valid and is signed by the key embedded in handset firmware. If the digital signature is invalid, the peripheral may reply to the host with an error and not execute the submitted code.

### Exemplary host LRU security protocols

*Packet inspection.* In some embodiments, the host LRU may intercept and inspect all packets from the peripheral to ensure that the mouse/touchpad, keypress and payment traffic is encrypted as expected.

*Security logging.* In some embodiments, the host LRU may discard and log to the event log any communications from its peripheral Ethernet port(s) that are not from the MAC address used to generate that port's encryption key, including broadcast DHCP requests. In other embodiments, the host LRU may discard and log to the event log any mouse, keypress, and payment communications, from its peripheral Ethernet port(s) that are not encrypted or that fail its decryption check.

In some embodiments, the host LRU may assign the peripheral an IP address using DHCP. In other embodiments, the host LRU may have a pool of only one IP address per expected peripheral (usually one per physical port).

In some embodiments, the host LRU may discard and log to the event log any "hello" message not from the IP address expected for that port. In yet other embodiments, the host LRU may log to the event log all valid "hello" messages from peripherals.

Since some the embodiments described above may indicate a MITM attempt, if other anomalous events also occurred on the same flight, the log entry could indicate the time the attack initiated.

*Security filtering.* In some embodiments, the host LRU may route/filter traffic from the peripheral to only permit it to go to a list of allowed hosts & TCP/UDP ports.

In some embodiments, any packet received from a peripheral with a disallowed destination may be dropped and logged to the event log.

In some embodiments, the host LRU may configure its Ethernet switch to block transfer of broadcast and multicast packets from a peripheral to the rest of the IFE network. In other embodiments, the host LRU could configure its Ethernet switch to by default block multicasts and broadcasts from the IFE network to the peripheral port.

In some embodiments, and in order to support peripherals with displays, the host LRU may support a configurable whitelist of allowed source addresses and multicasts to transfer directly to the peripheral.

In some embodiments, and to prevent denial of service attacks, the host LRU may set a rate limit on incoming traffic from each peripheral port.

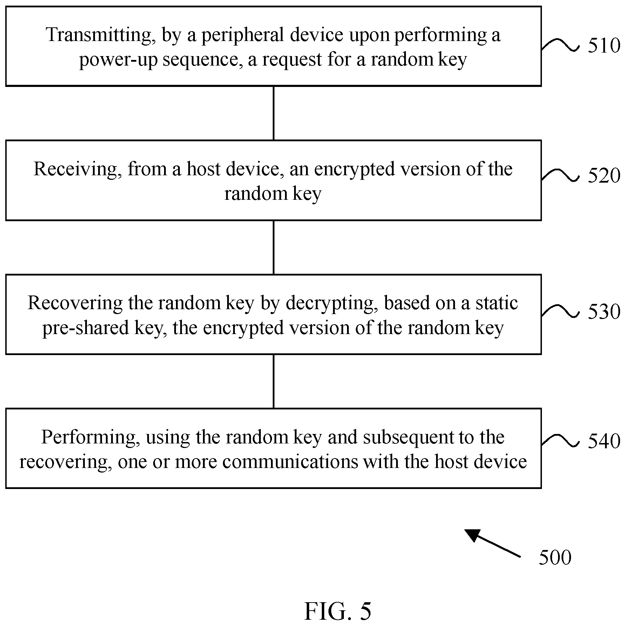

FIG. 5 shows a flowchart for an example of a method for secure communication. The method 500 includes, at step 510, transmitting, by a peripheral device (e.g., 220 in FIGS. 2A-2C) upon performing a power-up sequence, a request for a random key (step (a)).

The method 500 includes, at step 520, receiving, from a host device (e.g., host LRU 210 in FIGS. 2A-2C), an encrypted version of the random key (step (b)).

The method 500 includes, at step 530, recovering the random key by decrypting, based on a static pre-shared key, the encrypted version of the random key (step (c)).

The method 500 includes, at step 540, performing, using the random key and subsequent to the recovering, one or more communications with the host device (step (d)).

In some embodiments, and as described in FIG. 3, the method 500 may further include the step of repeating steps (a) through (d) each time the peripheral device performs the power-up sequence.

In some embodiments, the method 500 may further include the steps of determining that the power-up sequence has been performed, and transmitting, upon completing the power-up sequence, a request for another random key. Requesting and using a new random key upon powering up each time advantageously ensures that an encrypted session cannot be hijacked by an illegitimate peripheral device that is plugged into the networked system (e.g., an IFE system).

In some embodiments, receiving, from the host device, an unencrypted video stream.

In some embodiments, the static pre-shared key is stored on a program memory that is locked and cannot be read by an external device. This static pre-static key (also referred to as the KEK in FIG. 3) is preconfigured in the program memories of all legitimate LRUs (e.g., the host LRU, the system LRU) and peripherals.

In some embodiments, the one or more communications is encrypted using a cipher block chaining (CBC) mode of a 256-bit Advanced Encryption Standard (AES) or a stream cipher (e.g., ChaCha20 or Salsa20). In an example, the one or more communications between the host LRU and the peripheral is encrypted at an application layer.

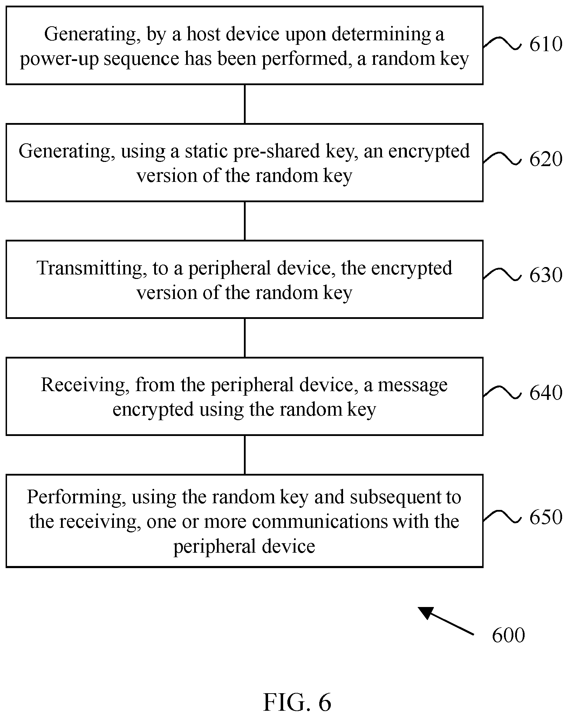

FIG. 6 shows a flowchart for an example of a method for secure communication. The method 600 includes, at step 610, generating, by a host device upon determining a power-up sequence has been performed, a random key (step (a)).

The method 600 includes, at step 620, generating, using a static pre-shared key, an encrypted version of the random key (step (b)).

The method 600 includes, at step 630, transmitting, to a peripheral device, the encrypted version of the random key (step (c)).

The method 600 includes, at step 640, receiving, from the peripheral device, a message encrypted using the random key (step (d)).

The method 600 includes, at step 650, performing, using the random key and subsequent to the receiving, one or more communications with the peripheral device (step (e)).

In some embodiments, and as described in FIG. 3, the method 600 may further include the step of repeating steps (a) through (e) each time it is determined that the power-up sequence has been performed.

In an example, determining the power-up sequence has been performed (in step (a)) comprises performing the power-up sequence. A new random key may be generated when the host device (e.g., host LRU 210 in FIGS. 2A-2C) powers up to ensure that while it was powered down, an illegitimate peripheral was not introduced into the network. This new random key may be propagated (via the KEK) to all peripherals that the host device was in communication with prior to its most recent power down sequence.

In another example, determining the power-up sequence has been performed (in step (a)) comprises receiving a key request from the peripheral device. A new random key may be generated for the specific peripheral device that has powered up again and is requesting a new key for subsequent communication with the host device.

In some embodiments, when a trusted platform module (TPM) is available to the host device, the generating the random key is based on the TPM, which is configured to securely generate one or more keys. In other embodiments, when a TPM is unavailable to the host device, the generating the random key is based on at least one of a current date, a current time or a media access control (MAC) address. Alternatively, the generating the random key is based on at least one of a build time of a first software module or a validity date or time of a second software module.

In some embodiments, the static pre-shared key is stored on a program memory that is locked and cannot be read by an external device. This static pre-static key (also referred to as the KEK in FIG. 3) is preconfigured in the program memories of all legitimate LRUs (e.g., the host LRU 210 and the system LRU 230 in FIGs. 2A-2C) and peripherals.

In some embodiments, the one or more communications is encrypted using a cipher block chaining (CBC) mode of a 256-bit Advanced Encryption Standard (AES) or a stream cipher (e.g., ChaCha20 or Salsa20). In an example, the one or more communications between the host LRU and the peripheral is encrypted at an application layer.

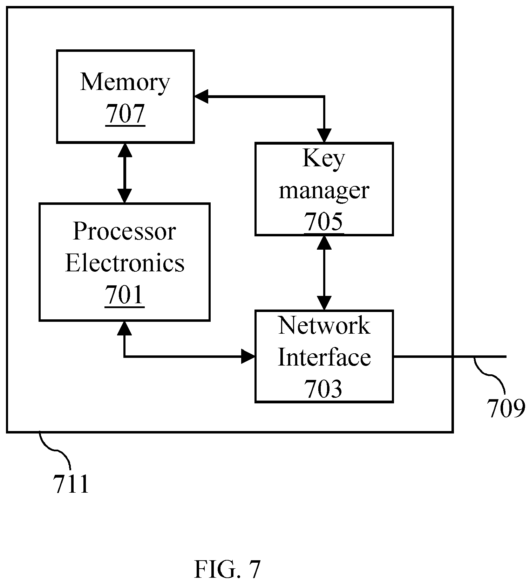

FIG. 7 is a block diagram representation of a portion of a device, in accordance with some embodiments of the presently disclosed technology. A device 711 can include processor electronics 701 such as a microprocessor that implements one or more of the techniques presented in this document. The device 711 can include a network interface 703 to send and/or receive data over one or more communication interfaces 709 (e.g., Ethernet). Device 711 can include one or more memories 707 configured to store information such as data and/or instructions. Device 711 can further include a key manager 705, which may include the TPM. In some implementations, the processor electronics 701 can include at least a portion of the network interface 703 and/or the key manager 705. In some embodiments, at least some of the disclosed techniques, modules or functions are implemented using the device 711.

It is intended that the specification, together with the drawings, be considered exemplary only, where exemplary means an example and, unless otherwise stated, does not imply an ideal or a preferred embodiment. As used herein, the singular forms "a", "an" and "the" are intended to include the plural forms as well, unless the context clearly indicates otherwise. Additionally, the use of "or" is intended to include "and/or", unless the context clearly indicates otherwise.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this patent document.

## Claims

1. A method for secure data communication, comprising:
(a) transmitting, by a peripheral device upon performing a power-up sequence, a request for a random key;
(b) receiving, from a host device, an encrypted version of the random key;
(c) recovering the random key by decrypting, based on a static pre-shared key, the encrypted version of the random key; and
(d) performing, using the random key and subsequent to the recovering, one or more communications with the host device.

2. The method of claim 1, further comprising:
repeating steps (a) through (d) each time the peripheral device performs the power-up sequence.

3. The method of claim 1, further comprising:
determining that the power-up sequence has been performed; and
transmitting, upon completing the power-up sequence, a request for another random key.

4. The method of claim 1, further comprising:
receiving, from the host device, an unencrypted video stream.

5. A method for secure data communication, comprising:
(a) generating, by a host device upon determining a power-up sequence has been performed, a random key;
(b) generating, using a static pre-shared key, an encrypted version of the random key;
(c) transmitting, to a peripheral device, the encrypted version of the random key;
(d) receiving, from the peripheral device, a message encrypted using the random key; and
(e) performing, using the random key and subsequent to the receiving, one or more communications with the peripheral device.

6. The method of claim 5, further comprising:
repeating steps (a) through (e) each time it is determined that the power-up sequence has been performed.

7. The method of claim 5, wherein determining the power-up sequence has been performed comprises performing the power-up sequence.

8. The method of claim 5, wherein determining the power-up sequence has been performed comprises receiving a key request from the peripheral device.

9. The method of claim 5, wherein the generating the random key is based on a trusted platform module (TPM) configured to securely generate one or more keys.

10. The method of claim 5, wherein the generating the random key is based on at least one of a current date, a current time or a media access control (MAC) address.

11. The method of claim 5, wherein the generating the random key is based on at least one of a build time of a first software module or a validity date or time of a second software module.

12. The method of claim 1 or 5, wherein the static pre-shared key is stored on a program memory that is locked and cannot be read by an external device.

13. The method of claim 1 or 5, wherein the one or more communications is encrypted using a cipher block chaining (CBC) mode of a 256-bit Advanced Encryption Standard (AES) or a stream cipher.

14. The method of claim 13, wherein the one or more communications is encrypted at an application layer.

15. An apparatus for wireless communication, comprising:
a processor; and
a network interface coupled to the processor, wherein the apparatus is configured to implement any method in claims 1 to 14.
